# EUROPEAN PATENT APPLICATION

(11) **EP 1 073 030 A2**
(43) Date of publication of application: **31.01.2001**
(21) Application number: 00500176.3
(22) Date of filing: 31.07.2000
(51) Int. Cl.: G09B 21/00

(54) **Event broadcasting system for the blind in concert halls and other areas**

(30) Priority: 30.07.1999 ES 200000700
(71) Applicant: Area 52 Consulting, S.L., 28028 Madrid (ES)
(72) Inventor: GOMEZ BORRALLO, Juan Jose, 28017 Madrid (ES); ENRIQUEZ SAENZ DE SANTA MARA, Porfirio, 28027 Madrid (ES)
(74) Representative: Isern Jara, Nuria

(57) **Abstract**

An even broadcasting system in concert halls intended to be used by the blind permitting them to enjoy shows by the narration of images and scenes, as well as providing information in other places to guide them safely. The system has a device (CD, DVD, mini-disc, etc.) where the information that should reach the user is recorded. This reader sends the information to an infrared amplifier that processes the audio signal, transforms it into an infrared signal and amplifies it to be transmitted to one or more infrared transmitters. The waves transmitted by the transmitter are captured by the user's receiver converting them into sound to be broadcast through the headset. In the case of shows, the narration is perfectly synchronised with the original film sound track, using the dead spaces for such a purpose and hence avoiding companions' dialogues in the cinema or theatre.

## Description

### Object of the Invention

The invention concerns an event broadcasting system in concert halls for the totally or partially blind, intended to allow them to enjoy the cinema, theatre, etc, under the same conditions as any other spectator, as well as to guide the users of the system in other areas such as transport, museums and so on.

More specifically, the present invention proposes, in its preferred embodiment, the development of a system having a reader by which a device (CD, DVD, mini-disc, etc.) is monitored, where the information that should reach the user during the show should arrive. The information captured by the reader is sent to an infrared amplifier which processes the audio signal, converting it into an infrared signal and then amplifying it to be transmitted to one or more infrared transmitters. The waves transmitted by the transmitter are picked up by the user's receiver, which converts them in acoustic signals that may be heard through the headsets of the reception device.

The field of application of the present invention is in the sector dedicated to the manufacture and/or use of equipment and devices intended to integrate handicapped people in the current society.

### Background and Summary of the Invention

At present, the possibility that a person with total or partial visual handicap goes to shows, the cinema, the theatre, the opera, etc., and has a perfect awareness of what is happening in the hall, is limited to those people accompanied by another person without sight problems who narrates them each event or scene of the relevant film or show.

This method has the drawback that the comments of the person informing their blind companion may bother other spectators in the hall and especially those in adjacent sits.

For this reason, it is necessary to reach a solution to this problem which affects many members of our society, to improve their integration with the rest of the population. Moreover, the solution adopted should be relatively economic such that any blind person may have the equipment necessary to go to shows, without depending on other normal people, hence preventing third parties being bothered and under the same conditions as any other spectator.

The present invention proposes an event broadcasting system for blind people in show halls (cinemas, theatres, etc.) permitting them to listen to both the original sound track (music and dialogs), the description of scenes, sets, actors and so on, by means of a small audio signal receiver and a headset.

Although the system was basically created to be applied in show halls, one of its alternatives, as previously indicated, is for other time sharing and cultural centres, such as museums, green houses and exhibitions of all types. Besides, and as an additional alternative, it may be destined to other uses, such as to guide and duly inform the handicapped person in transport, preventing dangerous situations which may lead to an accident with unforeseeable consequences.

The system, in its basic preferred embodiment, is provided with a reader which interprets a device (CD, DVD, mini-disc or any other similar one), where the information that should reach the user during the show is recorded. This reader sends the information to an infrared amplifier, which processes the audio signal, converting it into an infrared signal and amplifying it to be transmitted to one or several infrared transmitter(s). The waves transmitted by the transmitter are captured by the user receiver which transforms them into sound to broadcast them through the headset.

Both the reader and the amplifier and the infrared transmitters are located in the hall where the show takes place, preferably in a fixed place and joined to each other by means of a cable. However, the receiver connected to the headset is portable, small and of individual use.

The installation of the system object of the invention is not very expensive as the connection between the equipment installed in the hall is possible by means of wiring, which is an economic method not requiring any type of reform work.

The projection of the film is carried out under identical conditions to current ones as the narrative sound band does not interfere with the normal perception by the spectators without a handicap. On the other hand, people suffering with a visual handicap may have a receiver with their own headset, although obviously, the possibility that the halls and time sharing and cultural places, also have a determined number of them may also be considered, to be delivered to needed people at the entrance, without the latter changing the basis of the invention whatsoever.

### Brief Description of the Drawings

These and other features of the invention will be clearly shown in the following detailed description of the preferred embodiment thereof, only provided as an illustrative and non-limiting example, referring to the accompanying drawings where:

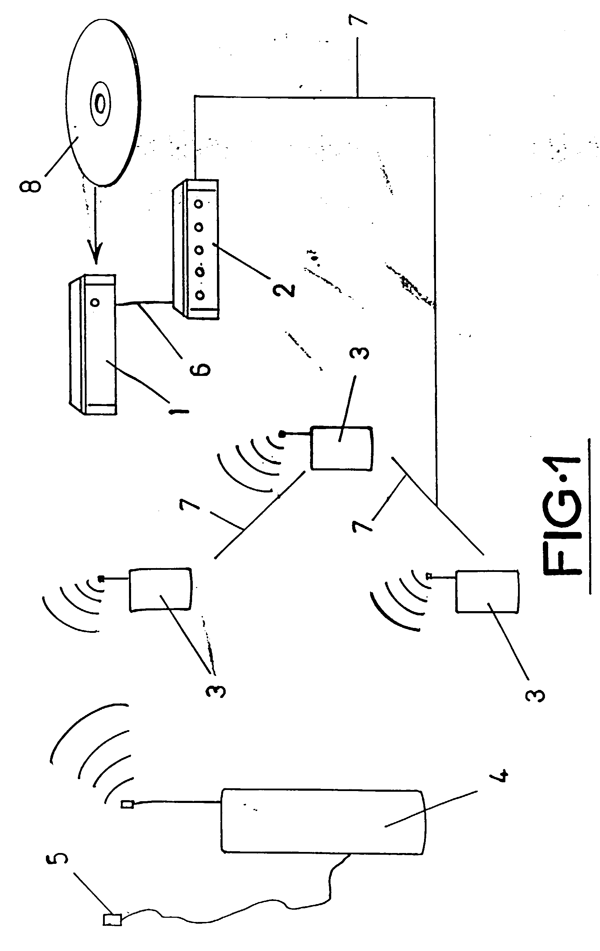

Figure 1 shows a diagram of the event broadcasting system for blind people in show halls.

### Description of the Preferred Embodiment

As has previously been indicated, the detailed description of the object developed by the present invention is referred to the single figure of the attached drawings, where a DVD reader (1) may be seen which is connected to an infrared ray amplifier (2) by means of a conventional cable (6) in turn connected to multiple infrared transmitters (3) by means of coaxial cable (7) and the infrared ray receivers (4) connected to the headset (5).

In the preferred embodiment, the support on which the information is recorded to reach the blind spectators is a DVD (8). Said information is the narration describing those events which cannot be perceived if one cannot see. This narration is perfectly synchronised with the original sound track of the film, using the dead spaces for such a purpose and hence avoiding the actors' dialogues, in the case of a cinema or theatre. The DVD may be provided by the film distributors in the case of cinemas or video-clubs which would present in one place or other, two sound track tapes, the original and the DVD narration. Likewise, CDs, mini-discs or other similar means may be used instead of DVD.

The DVD reader (1) is a standard reader on the market reading DVDs.

The infrared amplifier (2) processes the audio signal coming from the reader (1), transforming it into an infrared signal and amplifying it to be transmitted to the infrared transmitters (3).

The infrared transmitters (3) are connected to each other and strategically located to distribute the signal to all the dimensions of the room, such that the receivers (4) may receive the sound carrying signal independently from the position they occupy inside said hall.

The infrared receivers (4) are portable, easily handled, of a reduced size and individual use. They receive the signal sent by the transmitters (3) by means of an infrared reception cell and transform said signal into an audio signal to broadcast it to the user through the headset (5).

As will be understood, the principles of the invention are kept identical to those described above for the case in which it is intended to apply the system proposed to other installations or locations. Evidently, the specific adaptation requirements for each specific case, such as transmitter distribution, their location and means necessary for their installation, do not alter said principles nor limit the invention whatsoever.

It is not considered necessary to extend the contents of this description for an expert in the matter to understand its scope and the advantages derived from the invention, as well as to develop and apply the purpose thereof.

Nevertheless, it should be understood that the invention has been described in accordance with a preferred embodiment thereof, such that it may be modified without altering the basis of said invention, it being possible to execute said modifications, specifically its shape, size and/or manufacturing materials of the assembly or its parts.

## Claims

1. An event broadcasting system for the blind in concert halls and other areas, intended to permit this people to listen to determined information, such as the description of settings, scenes, actors and so on, related to a film or show of another type, without interfering with the normal perception of other spectators, as well as to receive information to be guided in other situations, such as transport or similar, characterised in that the system consists of a DVD reader (1) or other reproduction means that reads the narration of events and descriptions, perfectly synchronised with the original sound track and/or show dialogues, connected by means of a conventional cable (6) to an infrared signal amplifier (2), where the audio signal is treated, coming from the reader (1), its transformation into an infrared signal and its amplification to be transmitted with the preferred use of a coaxial cable (7), to a plurality of infrared transmitters (3), suitably connected to each other and strategically located to distribute the signal throughout the entire hall area, transmitting the signal received by radio to the infrared radiation receivers (4) conveyed by the different users, which capture the signal sent by the transmitters (3) through an infrared reception cell, transforming said signal into an audio signal that may be heard by the user with a headset (5).

2. A system according to claim 1, characterised in that alternatively, the DVD reader device may include other reading devices such as CD, mini-disc or other similar means, with the corresponding adaptation of the system reader (1).

3. A system according to claims 1 and 2, characterised in that both the reader (1) and the amplifier (2) and the infrared transmitters (3) are located in the hall where the show takes place or if pertinent, in the places destined to provide other information, basically in fixed places and connected to each other by a coaxial cable, while the receiver connected to the headset is portable-, small and of individual use.
